# EUROPEAN PATENT APPLICATION

(11) **EP 3 153 074 A1**
(43) Date of publication of application: **12.04.2017**
(21) Application number: 16191864.4
(22) Date of filing: 30.09.2016
(51) Int. Cl.: A47G 33/00, A21D 13/00, A23L 29/20, C12G 3/00

(54) **EDIBLE COMMUNION GEL CAPSULE**

(30) Priority: 08.10.2015 US 201562238754 P; 31.03.2016 US 201615087192
(71) Applicant: Lay, Theresa, Denver, CO 80206 (US)
(72) Inventor: Lay, Theresa, Denver, CO 80206 (US)
(74) Representative: Rutz, Andrea

(57) **Abstract**

An edible communion gel capsule including a gel capsule having at least one interior cavity and at least one of a liquid and, alternately, a powder disposed within the at least one interior cavity. The liquid is one of wine and, alternately, grape juice, and the powder is an edible grape juice powder. An edible solid material is disposed around one of a medial section of the gel capsule, an entirety of an exterior surface area of the gel capsule, and one-half of the exterior surface area of the gel capsule. The solid material is bread.

## Description

### CROSS-REFERENCE TO RELATED APPLICATIONS

U.S. Provisional Application No. 62/238,754 Filed October 8, 2015

U.S. Patent Application Number 15/087,192 Filed March 31, 2016

### SPECIFICATION

### BACKGROUND OF THE INVENTION

Various types of gel capsules are known in the prior art. However, what has been needed is an edible communion gel capsule including a gel capsule having at least one interior cavity and at least one of a liquid and, alternately, a powder disposed within the at least one interior cavity. What has been further needed is for the liquid to be one of wine and, alternately, grape juice, and the powder to be an edible grape juice powder. Lastly, what has been needed is an edible solid material disposed around one of a medial section of the gel capsule, an entirety of an exterior surface area of the gel capsule, and one-half of the exterior surface area of the gel capsule. The solid material is bread. The edible communion gel capsule is uniquely structured to allow the elements of communion to be compact, portable, conveniently transportable and distributable so that a user can participate in the communion ritual both away from and during church.

### FIELD OF THE INVENTION

The present invention relates to gel capsules, and more particularly, to an edible communion gel capsule.

### SUMMARY OF THE INVENTION

The general purpose of the present edible communion gel capsule, described subsequently in greater detail, is to provide an edible communion gel capsule which has many novel features that result in an edible communion gel capsule which is not anticipated, rendered obvious, suggested, or even implied by prior art, either alone or in combination thereof.

To accomplish this, the present edible communion gel capsule includes a gel capsule having at least one interior cavity and at least one of a liquid and, alternately, a powder disposed within the at least one interior cavity. The liquid is one of wine and, alternately, grape juice, and the powder is an edible grape juice powder. An edible solid material is disposed around one of a medial section of the gel capsule, an entirety of an exterior surface area of the gel capsule, and one-half of the exterior surface area of the gel capsule. The solid material is bread. The edible communion gel capsule optionally includes a crease medially disposed around an entirety of a circumference of the gel capsule. The optional crease permits a user to break the bread at the location of the crease and remove it from around the gel capsule.

The gel capsule can comprise a gelatin-based shell, although polymer shells based on starch, carrageenan or other suitable edible materials can be used. The gel capsule can optionally be flavored to facilitate pleasurable consumption after the user bites the capsule to release the liquid. In order for the liquid to be disposed within the interior cavity of the gel capsule, the gel capsule can optionally be produced using a well known rotary die encapsulation process, wherein a juice of a compatible composition is injected into the capsule as it is formed.

The grape juice may be of the natural variety or may comprise a suitably flavored water mixture, with the juice or water mixture specifically chosen to exhibit characteristics that make it room temperature stable.and compatible with the capsule material. It is envisioned that in some variations, the juice can be concentrated in order to provide the user with a suitable grape flavor in his mouth. If the powder is used in place of the liquid, hard shell capsules may be used in place of a gel capsule and, alternatively, a solid pill comprising the powdered juice can be used in place of the gel capsule.

The bread can be of any suitable composition, while most likely comprising dried unleavened bread with a very low residual moisture level so as to hinder or prevent the formation of mold and give the product a suitable shelf life. It is envisioned that additives can be provided in the bread mixture to hinder mold growth, increase its strength, and minimize the risk of breakage that may occur from the bread being packaged with other gel capsules in a container.

In some variations, the bread can be baked in place over the formed gel capsule, but more typically, the bread is separately formed and baked and later slid over the gel capsule. The inside surface of the bread and the outside surface of the gel capsule may be wetted to encourage the bread to bound to the gel capsule. In other variations, an edible adhesive may be used or the bread may be secured in place through friction only.

It is envisioned that prior to consumption, the bread will be separated from the gel capsule and then consumed first during the user's communion ritual. Next, the user will consume the liquid and, alternately, the powder. As mentioned above, the gel capsule itself may be flavored to enhance its edibility. In another form of consuming the communion gel capsule, it can be swallowed whole without separating the bread from the gel capsule.

Thus has been broadly outlined the more important features of the present edible communion gel capsule so that the detailed description thereof that follows may be better understood and in order that the present contribution to the art may be better appreciated.

### BRIEF DESCRIPTION OF THE DRAWINGS

### FIGURES

Figure 1 is a front isometric view showing a solid material medially disposed around a gel capsule.
Figure 2 is a side elevation view.
Figure 3 is a cross-sectional view taken along line 3-3 of Figure 2.
Figure 4 is a front isometric view showing the solid material disposed around an entirety of an exterior surface area of the gel capsule.
Figure 5 is a front isometric view showing the solid material disposed around one-half of the exterior surface area of the gel capsule.
Figure 6 is a front isometric view showing the gel capsule wherein one-half of the exterior surface area of the gel capsule is the solid material.

### DETAILED DESCRIPTION OF THE DRAWINGS

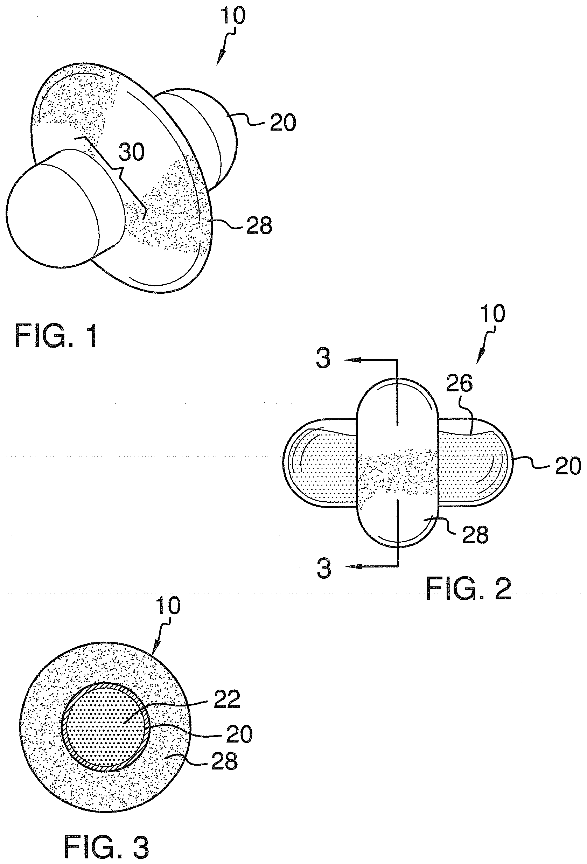

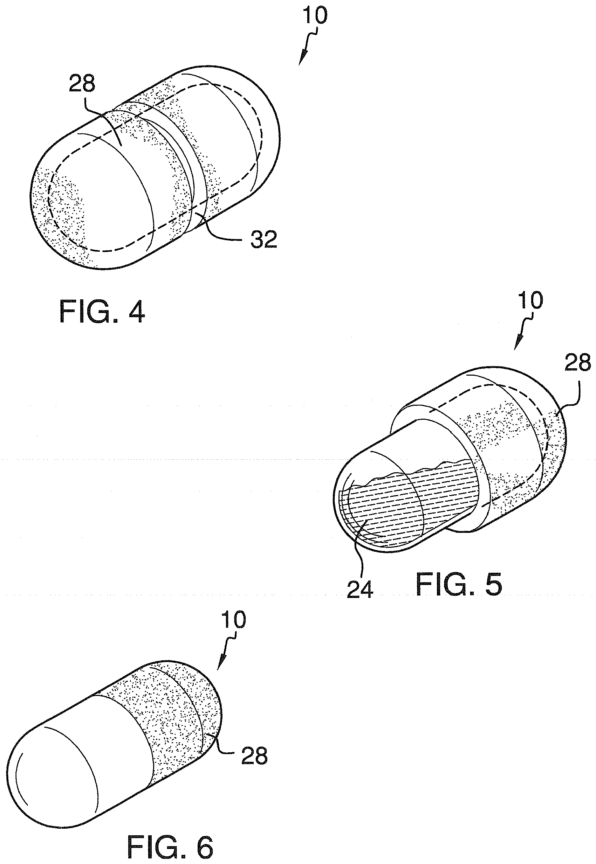

With reference now to the drawings, and in particular FIGS. 1 through 6 thereof, an example of the instant edible communion gel capsule employing the principles and concepts of the present edible communion gel capsule and generally designated by the reference number 10 will be described.

Referring to FIGS. 1 through 6 the present edible communion gel capsule 10 is illustrated. The edible communion gel capsule 10 includes a gel capsule 20 having at least one interior cavity 22 and at least one of a liquid 24 and, alternately, a powder 26 disposed within the at least one interior cavity. The liquid 24 is one of wine and, alternately, grape juice, and the powder 26 is an edible grape juice powder. An edible solid material 28 is disposed around one of a medial section 30 of the gel capsule 20, an entirety of an exterior surface area of the gel capsule 20, and one-half of the exterior surface area of the gel capsule 20. The solid material 28 is bread. A crease 32 is optionally medially disposed around an entirety of a circumference of the gel capsule 20.

## Claims

1. An edible communion gel capsule comprising:
a gel capsule having at least one interior cavity and at least one of a liquid and, alternately, a powder disposed within the at least one interior cavity;
wherein the liquid is one of wine and, alternately, grape juice;
wherein the powder is an edible grape juice powder;
an edible solid material disposed around one of a medial section of the gel capsule, an entirety of an exterior surface area of the gel capsule, and one-half of the exterior surface area of the gel capsule;
wherein the solid material is bread.

2. The edible communion gel capsule of claim 1 further comprising a crease medially disposed around an entirety of a circumference of the gel capsule.
